# EUROPEAN PATENT APPLICATION

(11) **EP 2 538 042 A1**
(43) Date of publication of application: **26.12.2012**
(21) Application number: 11744556.9
(22) Date of filing: 09.02.2011
(51) Int. Cl.: F01L 1/08, F02D 13/02, F02D 41/02, F02M 61/18

(54) **DIESEL ENGINE**

(30) Priority: 19.02.2010 JP 2010035321
(71) Applicant: Yanmar Co., Ltd., Osaka-shi, Osaka 530-8311 (JP)
(72) Inventor: HAMAOKA, Shunji, Osaka-shi Osaka 5308311 (JP); KOTOU, Fumiya, Osaka-shi Osaka 5308311 (JP); HANDA, Tetsuo, Osaka-shi Osaka 5308311 (JP); OMOTE, Hiroshi, Osaka-shi Osaka 5308311 (JP)
(74) Representative: Jostarndt, Hans-Dieter
(86) International application number: PCT/JP2011/052703
(87) International publication number: WO 2011/102269

(57) **Abstract**

A diesel engine (1) configured so that fuel spray patterns (45, 46) are formed in a combustion chamber (15), in which the swirl flow (W) of intake air is being generated, by directly injecting the fuel from a fuel injection nozzle (4) having a multiple nozzle hole structure. The diesel engine (1) is provided with a superposition avoidance structure for reducing the superposition of the fuel spray patterns (45, 46) emitted from adjacent nozzle holes (34a, 35a). A valve timing mechanism (17) is provided as the superposition avoidance structure, and the valve timing mechanism (17) sets the timing (29a, 50a, 51 a), which is the start point of the valve closing operation of air intake valves (3c, 3c) for sucking air into the combustion chamber (15), to a point before the bottom dead center (B) of air intake. Also, the valve closing operation is provided with a buffering section (52) in which the seating speed of the air intake valves (3c, 3c) is reduced to buffer the impact of the seating, and the timing (51c) which is the start point of the buffer section (52) is set to a point before the bottom dead center (B) of air intake.

## Description

### Technical Field

The present invention relates to a direct injection diesel engine in which a swirl flow made by rotating air sucked in a combustion chamber laterally so as to form a swirl (hereinafter, referred to as "swirl flow") is generated and fuel is directly injected from a fuel injection nozzle having a multiple nozzle hole structure to the combustion chamber. Especially, the present invention relates to an art of combustion which can reduce NOx without worsening fuel economy and increasing black smoke.

### Background Art

Conventionally, in a direct injection diesel engine in which fuel is directly injected to a combustion chamber and self-ignition is performed, timing retard is known as an art for reducing NOx generation amount. The timing retard is an art in which combustion maximum temperature is reduced by retarding ignition timing so as to suppress reaction of nitrogen and oxygen and reduce NOx generation amount. In this case, since ratio of fuel supplied after initial combustion at which the combustion maximum temperature is obtained is large, the combustion is incomplete, whereby fuel economy is worsened and black smoke generation amount is increased. Then, an art is known in which guide parts guiding fuel spray of fuel injection to circumferential part and center part of a combustion chamber are disposed one after the other so as to disperse the fuel spray uniformly and improve combustion efficiency (for example, see the Patent Literature 1).

### Prior Art Reference

### Patent Literature

Patent Literature 1: the Japanese Patent Laid Open Gazette Hei. 8-296442

### Disclosure of Invention

### Problems to Be Solved by the Invention

However, according to the art, though improvement of the combustion efficiency can be expected, the incomplete combustion caused by fuel supplied after the initial combustion by the timing retard cannot be suppressed. Therefore, there is a problem in that stable improve of fuel economy and reduction of black smoke generation amount are difficult by the art.

Especially, in a multiple nozzle hole structure in which many nozzle holes are provided so as to increase nozzle hole area and prevent worsening of fuel economy, the distance between the nozzle holes is shortened and the distance between fuel spray patterns formed by injected fuel from the nozzle holes is also shortened. Accordingly, in the part in which the swirl flow is strong, the fuel spray pattern with small power for moving straight in the combustion chamber (hereinafter, referred to as "rectilinear propagation characteristic") is curved to the swirl direction of the swirl flow and easily overlaps adjacent fuel spray pattern. At the spray overlap part, there is a problem in that fuel density is increased partially and incomplete combustion is excessive and stable improve of fuel economy and reduction of black smoke generation amount become more difficult.

### Means for Solving the Problems

According to the first aspect of the present invention, a diesel engine in which fuel is injected directly from a fuel injection nozzle having multiple nozzle hole structure to a combustion chamber, in which a swirl flow is generated, so as to form a plurality of fuel spray patterns, comprises an overlapping avoidance structure reducing overlapping of the fuel spray patterns from adjacent nozzle holes. A valve timing mechanism, which sets a start point of closing operation of an air intake valve sucking air into the combustion chamber to a point before the bottom dead center of air intake, is provided as the overlapping avoidance structure. A buffering section in which seating speed of the air intake valve is reduced so as to buffer impact of seating is provided in the valve closing action, and a start point of the buffer section is set to a point before the bottom dead center of air intake.

According to the second aspect of the present invention, a different diameter multi-nozzle structure is provided as the overlapping avoidance structure in addition to the valve timing mechanism. The different diameter multi-nozzle structure includes a plurality of upper and lower nozzle hole lines, and among the nozzle hole lines, nozzle hole diameter of the nozzle hole line at the upper side with small dip of fuel injection direction is set large so as to increase rectilinear propagation characteristic.

### Effect of the Invention

The present invention constructed as the above brings the following effects.
According to the first aspect of the present invention, in the valve timing mechanism, after starting the valve closing action, since the air intake passage is closed gradually by the air intake valves, the air intake process is continued while the intake air flow is restricted until the piston reaches the bottom dead center. Therefore, the intake air is adiabatically expanded so as to reduce the intake air temperature in the cylinder, whereby the combustion maximum temperature is reduced so as to reduce generation amount of NOx. In this case, differently from the case of performing the timing retard, the ratio of fuel supplied after the initial combustion is not increased. Furthermore, in the valve timing mechanism, by shortening the time from the start of the valve opening action to the start of the valve closing action of the intake valves (hereinafter, referred to as "the valve opening time"), the air intake amount at the high lift part at which the swirl flow tends to cause is restricted, and by expanding the intake air, the swirl flow W following the air intake is made small, whereby the overlapping caused by curving the plurality of the fuel spray patterns by the swirl flow can be reduced even in the multiple nozzle hole structure. Accordingly, by making the wide spray overlapping area small, the partial increase of the fuel density can be reduced, whereby the incomplete combustion can be suppressed so as to improve the fuel economy stably and reduce the generation amount of black smoke. Additionally, the seating speed of the air intake valves can be reduced before large pressure variation occurs in the combustion chamber at the bottom dead center, whereby the air intake valves can be prevented from colliding hard with the seat surfaces under such pressure variation so as to prevent the damage of the air intake valves or the seat surfaces.

According to the second aspect of the present invention, in the diesel engine, when the large swirl flow is generated by variation of air intake condition or the like, the rectilinear propagation characteristic of the upper fuel spray patterns passing through the swirl flow at the outer side in the swirl with high speed can be increased, whereby the rectilinear propagation characteristic of each of the fuel spray patterns can be rationalized corresponding to the curve power from the swirl flow. Therefore, the touching of the tip of the fuel spray pattern to the wall surface of the combustion chamber and the stacking of much carbon as the result thereof can be suppressed minimally, and the wide spray overlapping area can be made small so as to reduce the partial increase of the fuel density. Accordingly, the air utilization rate in the combustion chamber can be improved so as to improve the fuel economy stably and reduce the generation amount of black smoke even if the large swirl flow is generated.

### Brief Description of Drawings

[Fig. 1] A sectional front view of entire construction of a diesel engine according to the present invention.
[Fig. 2] An explanation drawing of relation between an angle of a crankshaft of an intake valve and valve closing action.
[Fig. 3] An explanation drawing of relation between the angle of the crankshaft of the intake valve and the valve closing action when the valve closing action is started and stopped near an intake bottom dead center.
[Fig. 4] An explanation drawing of relation between the angle of the crankshaft of the intake valve and the valve closing action when a buffering section is provided.
[Fig. 5] A side view partially in section of a tip of a fuel injection nozzle.
[Fig. 6] A side view partially in section of vicinity of a combustion chamber showing fuel injection state.
[Fig. 7] A bottom view of a tip of the fuel injection nozzle.
[Fig. 8] A bottom view of the vicinity of the combustion chamber showing fuel injection state when a large swirl flow is generated.

### Description of Notations

- 1: diesel engine
- 3c: air intake valve
- 4: fuel injection nozzle
- 15: combustion chamber
- 17: valve timing mechanism
- 29a • 50a • 51a: timing (start of valve closing action)
- 34 • 35: nozzle hole lines
- 45 • 46: fuel spray patterns
- 51c: timing (start point of buffering section)
- 52: buffering section
- B: intake bottom dead center
- D: dip
- d1: nozzle hole diameter
- W: swirl flow

### Detailed Description of the Invention

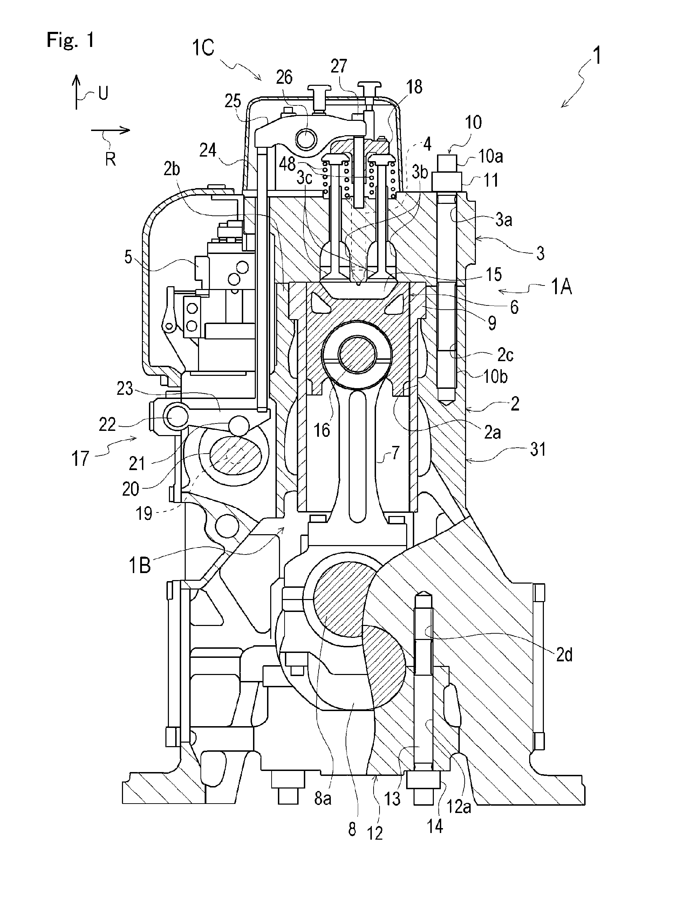

Next, an explanation will be given on a mode for carrying out the invention.
A direction of an arrow U in Fig. 1 is regarded as an upward direction of a diesel engine and a direction of an arrow R is regarded as a rightward direction of the diesel engine so as to explain positions and directions of members described below.

Firstly, an explanation will be given on entire construction of a diesel engine 1 according to the present invention. Since each of cylinders in the diesel engine 1 is substantially the same, only one of the cylinders is explained.
The diesel engine 1 includes an engine main body 1A such as a cylinder 31 including a cylinder block 2 and a cylinder head 3, a main motion part 1B such as a piston 6, a connecting rod 7, a crankshaft 8, a valve timing mechanism 17 and the like, and an intake and exhaust valve driving part 1C such as a fuel injection nozzle 4, a fuel injection pump 5 and the like.

In the engine main body 1A, a through hole 2a penetrating vertically the cylinder block 2 of the cylinder 31 is formed. A rigid cylinder liner 9 having substantially the same inner diameter as the through hole 2a is inserted into the through hole 2a and the piston 6 contacts slidably with the inside of the cylinder liner 9, whereby the inner wall of the cylinder 31 is not worn by the vertical reciprocating motion of the piston 6.

In a top deck 2b at the upper end of the cylinder block 2, four head bolt holes 2c are provided at regular intervals on a circle centering on the axis of the cylinder liner 9. In the cylinder head 3 above the top deck 2b, four through holes 3a are provided at regular intervals on a circle centering on the axis of the cylinder liner 9, and each of the through holes 3a is arranged coaxially with corresponding one of the head bolt holes 2c.

Accordingly, lower screw parts 10b of head bolts 10 are screwed into the head bolt holes 2c, and then upper screw parts 10b of head bolts 10 is projected from the upper end surface of the cylinder head 3 through the through holes 3a and nuts 11 are screwed on the upper screw parts 10b, whereby the cylinder head 3 is fastened and fixed to the top deck 2b of the cylinder block 2.

Similarly, at the side opposite to the top deck 2b of the cylinder block 2, cap bolt holes 2d are provided. The lower end surface of the cylinder block 2 is covered by a metal cap 12, and through holes 12a are arranged in the metal cap 12 coaxially with the cap bolt holes 2d. By cap bolts 13 and nuts 14, the metal cap 12 is fastened and fixed to the lower surface of the cylinder block 2. Between the metal cap 12 and the lower surface of the cylinder block 2, the crankshaft 8 is rotatably pivoted.

In the main motion part 1B, as mentioned above, the piston 6 is provided slidably vertically inside the cylinder liner 9. A combustion chamber 15 forming fuel spray is provided in a space surrounded by the upper end surface of the piston 6 and the lower end surface of the cylinder head 3.

In the middle portion of the piston 6 in the vertical direction, a piston pin 16 is provided which crosses perpendicularly with the axis of the cylinder liner 9 and is in parallel to the axis of the crankshaft 8. The piston pin 16 is inserted into the upper end of the connecting rod 7 so that the connecting rod 7 can rock. On the other hand, a crank pin 8a of the crankshaft 8 is inserted rotatably into the lower end of the connecting rod 7, whereby the crankshaft 8 can be interlocked with the piston 6 via the connecting rod 7.

Accordingly, the vertical reciprocating motion of the piston 6 is transmitted via the connecting rod 7 to the crankshaft 8 and exchanged into rotational motion centering on the crankshaft 8.

Furthermore, at the left side of the cylinder block 2, the valve timing mechanism 17 is arranged. A camshaft 19 of the valve timing mechanism 17 is connected interlockingly to the crankshaft 8 via gears and the like, whereby the rotational motion of the crankshaft 8 is transmitted to the camshaft 19 as rotational power so as to drive the valve timing mechanism 17.

In the intake and exhaust valve driving part 1C, a pair of left and right air intake passages 3b for sending air into the combustion chamber 15 and a pair of left and right air intake valves 3c which can open and close the air intake passages 3b are provided in the cylinder head 3. Similarly, a pair of left and right exhaust passages (not shown) for discharging exhaust gas and a pair of left and right exhaust valves which can open and close the exhaust passages are provided in the cylinder head 3. In the diesel engine 1 of this embodiment, the two air intake valves 3c and the two exhaust valves are provided for each of the cylinders. Each of the valves is opened and closed by the valve timing mechanism 17 as discussed later.

Furthermore, in the cylinder head 3, the fuel injection nozzle 4 is provided so that the tip of the fuel injection nozzle 4 is projected into the combustion chamber 15, and fuel is sprayed into the combustion chamber 15 through a plurality of nozzles formed as discussed in detail later.

The fuel injection nozzle 4 is connected via fuel pipes (not shown) to the fuel injection pump 5 arranged at the left side of the cylinder block 2. When the rotational motion of the crankshaft 8 is transmitted from gears and the like via the camshaft 19 to the fuel injection pump 5, fuel is pressingly sent and supplied to the fuel injection nozzle 4 via the fuel pipes, and fuel injection is performed corresponding to the driving state of the diesel engine 1.

Next, an explanation will be given on the valve timing mechanism 17 and closing timing control of the air intake valves 3c by the valve timing mechanism 17 referring to Figs. 1 to 4.
As shown in Fig. 1, in the valve timing mechanism 17, the camshaft 19 is arranged at the left of the cylinder block 2 and in parallel to the axis of the crankshaft 8. A cam 20 having a predetermined cam profile is engaged with the outer side of the camshaft 19, and a cam follower 21 touches the upper portion of the circumference of the cam 20.

The cam follower 21 is provided at a lower side of a substantially lateral center of a swing arm 23, and the left end of the swing arm 23 is pivoted on a rocking shaft 22, whereby the swing arm 23 is rocked vertically centering on the rocking shaft 22 following the cam profile of the cam 20.

Furthermore, the right end of the swing arm 23 is connected to a lower end of a push rod 24. The push rod 24 penetrates vertically the left portion of the cylinder head 3 so as to be slidable vertically, and the upper end of the push rod 24 projecting from the cylinder head 3 is connected to a left end of a rocker arm 25 provided above the cylinder head 3.

The substantially lateral center of the rocker arm 25 is pivoted centering on a rocker arm shaft 26 arranged in parallel to the camshaft 19 so as to be able to rock vertically, and the right end of the rocker arm 25 is connected via an attachment shaft 27 to an intake connection member 18 connecting between the upper ends of the pair of left and right air intake valves 3c.

The intake connection member 18 is always biased upward by biasing force of a spring 48 interposed between the upper surface of the cylinder head and the upper end umbrella parts of the air intake valves 3c, whereby the push rod 24 is pushed downward centering on the rocker arm shaft 26 and the cam follower 21 is pushed via the swing arm 23 to the cam 20. Accordingly, the follow-up characteristic of the cam follower 21 to the cam 20 is improved so as to improve the set accuracy of the opening and closing timing of the air intake valves 3c.

Similarly, the opening and closing timing of the exhaust valves is set following a cam profile of a cam (not shown) provided in the valve timing mechanism 17.

In the valve timing mechanism 17 constructed as the above, the camshaft 19 to which the rotational power is inputted is connected interlockingly to the crankshaft 8 as mentioned above, and the opening and closing timing is controlled based on the phase of the crankshaft 8.

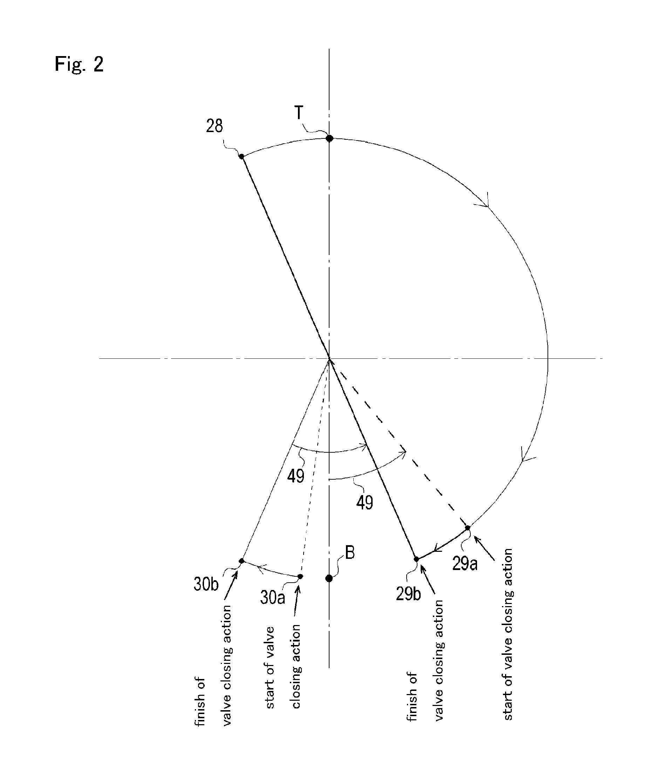

As shown in Fig. 2, when the opening action of the air intake valves 3c is started at a timing 28 before an intake top dead center T, normally, the control is performed so that the closing action is started at a timing 30a after an intake bottom dead center B and the closing action is stopped at a timing 30b. By setting the timing 28 of starting the opening action of the air intake valves 3c before the intake top dead center T, the overlapping time of the opening time of the air intake valves 3c and the opening time of the exhaust valves is extended so as to increase exhaust amount, thereby improving the engine characteristic of the diesel engine 1. The timing 28 of starting the opening action of the air intake valves 3c is not limited to be before the intake top dead center T.

To the contrary, in this embodiment, the cam profile of the cam 20 is formed so that the timing 28 of starting the opening action of the air intake valves 3c is set so as not to spoil the exhaust amount and only the timings 30a and 30b of the start and stop of the closing action is quickened for a phase angle 49 in the angle of the crankshaft 8 so as to be timings 29a and 29b before the intake bottom dead center B. In this case, the intake process is continued after the closing action is finished and the valves are closed, and intake air inhaled from the air intake passages 3b into the cylinder 31 is adiabatically expanded while being airtight.

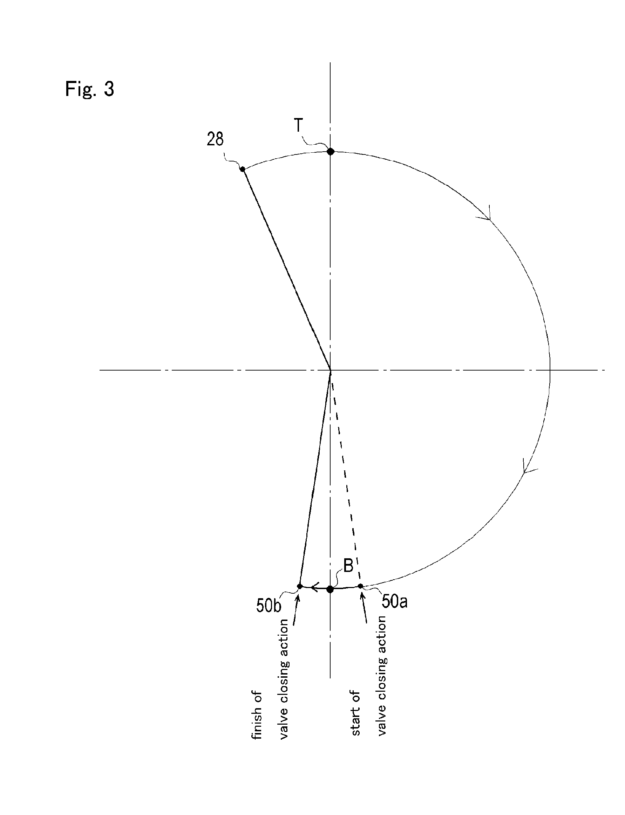

As shown in Fig. 3, the cam profile of the cam 20 can be formed so that the timing of starting the closing action of the air intake valves 3c is a timing 50a before the intake bottom dead center B similarly to the timing 29a and the timing of stopping the closing action of the air intake valves 3c is a timing 50b after the intake bottom dead center B. In this case, until the piston 6 reaches the intake bottom dead center B, the closing action is not finished, but the closing action has been started, whereby the air intake passages 3b of the air intake valves 3c are blocked gradually. Accordingly, the intake process is continued while the intake air flow is restricted, and the intake air inhaled from the air intake passages 3b into the cylinder 31 is adiabatically expanded while being nearly airtight.

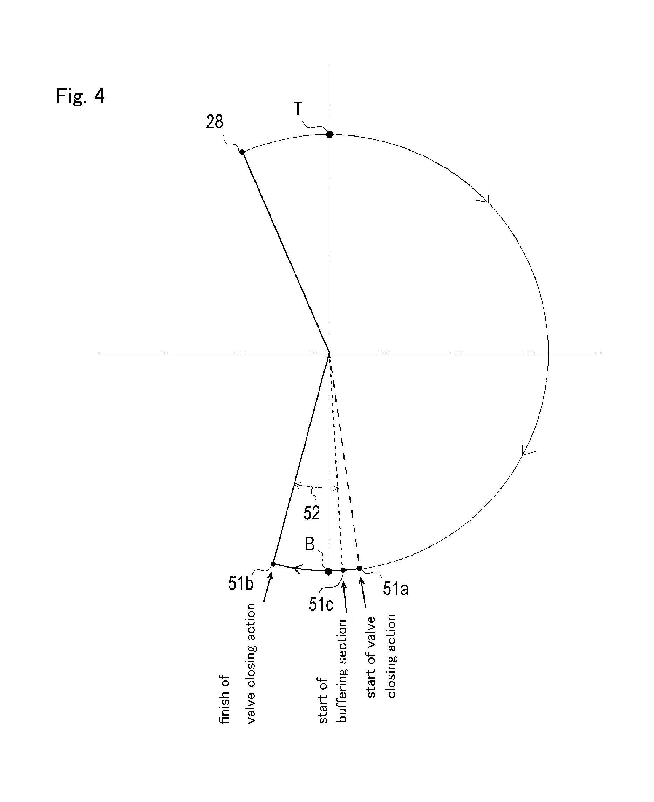

As shown in Fig. 4, the cam profile of the cam 20 can be formed so that the timings of starting and stopping the closing action of the air intake valves 3c are timings 51 a and 51b near the intake bottom dead center B similarly to the timings 50a and 50b and a buffering section 52 at which sitting speed of the air intake valves 3c is reduced is provided at the middle of the closing action so as to make the timing of starting the buffering section 52 be a timing 51c before the intake bottom dead center B. In this case, until reaching the intake bottom dead center B, the air intake valves 3c come gradually close to seat surfaces (not shown). Accordingly, when large variation of pressure occurs in the combustion chamber 15 at the intake bottom dead center B, the variation of pressure is prevented from making the air intake valves 3c collide hard with the seat surfaces in error.

Furthermore, in the valve timing mechanism 17 concerning the present invention shown in each of Figs. 2 to 4, differently from the conventional timing retard, a timing of ignition is still normal, whereby a rate of fuel supplied after initial combustion is not increased. Moreover, in the valve timing mechanism 17, the time of opening the valve can be reduced so as to restrict air intake amount at a high lift part at which a swirl flow tends to cause, and the intake air is expanded so as to make the swirl flow following the air intake small, whereby overlapping of fuel spraying discussed later can be prevented even in multi-nozzle structure.

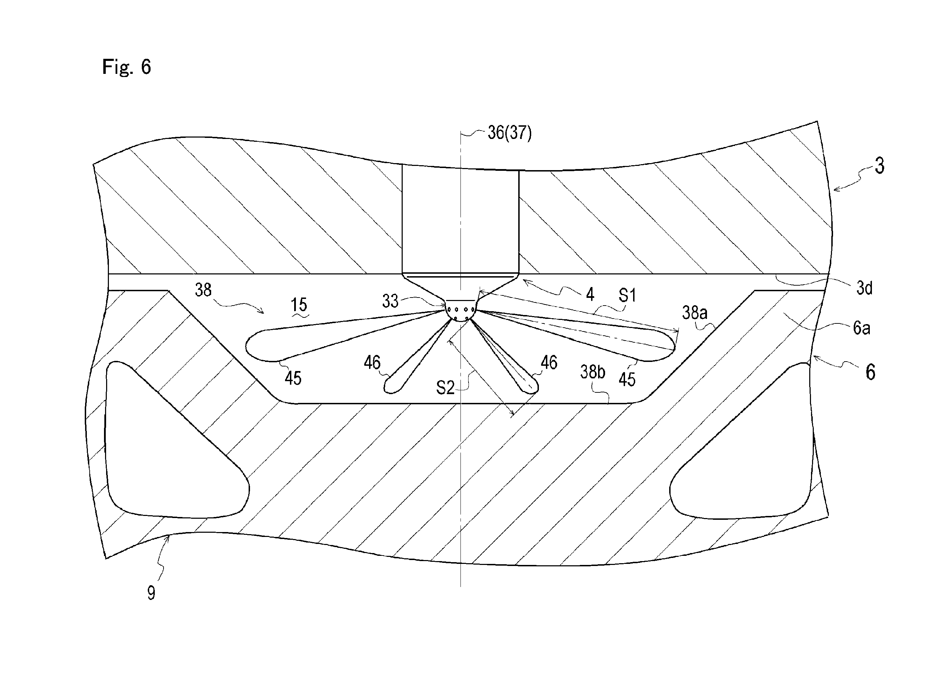

Next, an explanation will be given on the structure and action of the fuel injection nozzle 4 performing the control of the opening and closing timings as mentioned above referring to Figs. 1, 5 and 6.
The fuel injection nozzle 4 is engaged with the cylinder head 3 so that a nozzle axis 36 is arranged coaxially to a cylinder centerline 37 of the cylinder 31. Furthermore, a semiglobular spraying part 33 is formed in a lower portion of a nozzle body 32 of the fuel injection nozzle 4, and the spraying part 33 is arranged so as to be directed inside the combustion chamber 15 from a lower surface 3d of the cylinder head 3.

A spherical suck hole 39 is formed inside the spraying part 33, and a sphere center 40 of the suck hole 39 is positioned on the nozzle axis 36. A conical lower end 41a of a valve body 41 slidable vertically is projected to the suck hole 39, and the lower end 41a can sit on a valve seat 32a in the nozzle body 32. Furthermore, a fuel supply passage 42 is formed between the inner peripheral surface of the nozzle body 32 and the outer peripheral surface of the valve body 41.

In this construction, at the time of starting the fuel injection, fuel with high pressure is supplied from the fuel injection pump 5 to the fuel supply passage 42 and then passes through a gap 42a between the lower end 41a of the valve body 41 and flows into the suck hole 39, and is sprayed via multiple holes formed in the spraying part 33 discussed later into a cavity 38 constituting the combustion chamber 15.

At the time of stopping the fuel injection, an electromagnetic valve or the like is operated based on a control signal from a control device (not shown), and an actuator such as a hydraulic piston makes the valve body 41 fall so as to cut off the gap 42a. Accordingly, the supply of fuel to the suck hole 39 is stopped so as to stop the fuel injection from the multiple holes into the cavity 38.

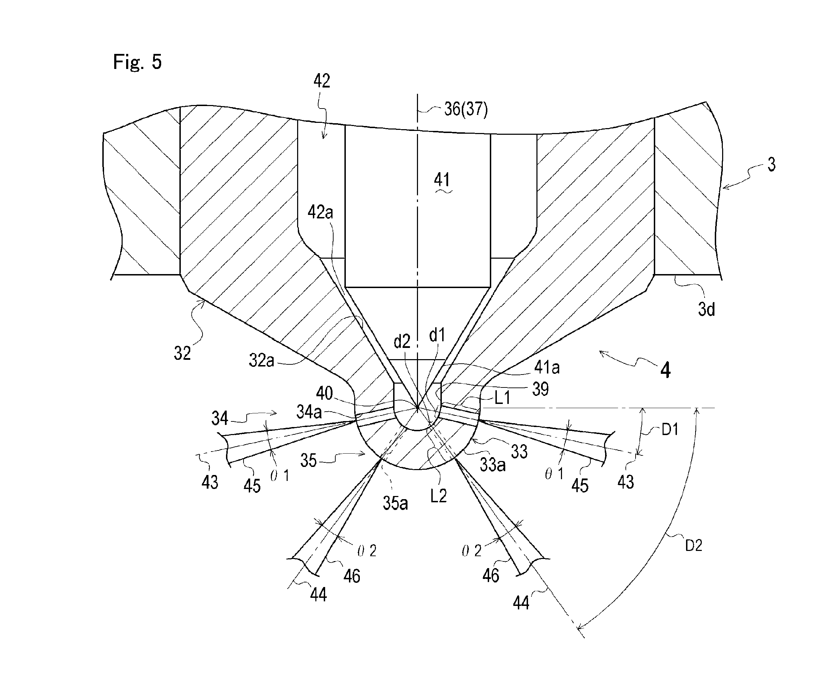

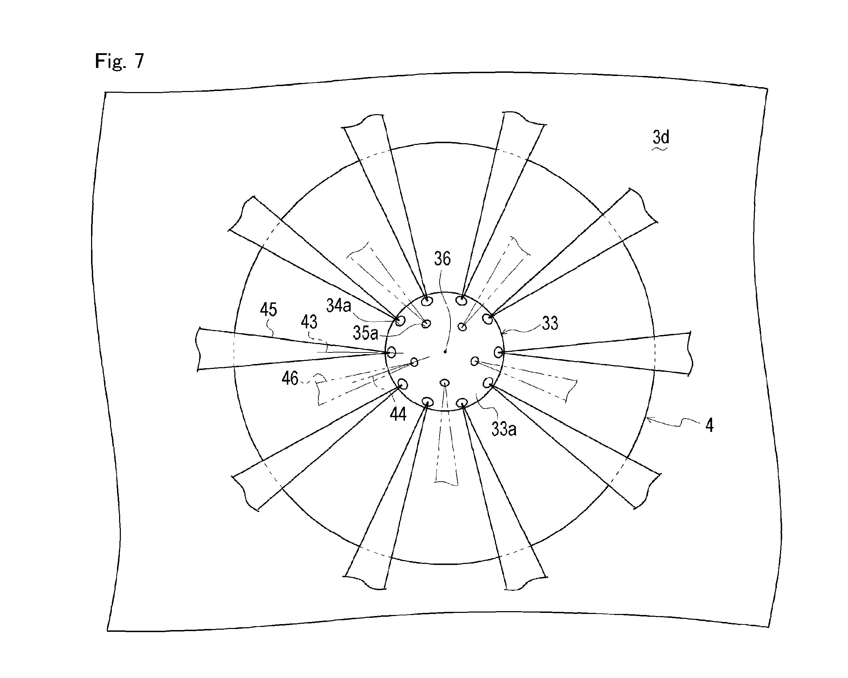

Next, an explanation will be given on the structure of the multiple holes in the spraying part 33 and the influence of the swirl flow on the fuel spray from the multiple holes referring to Figs. 5 to 8.
As shown in Figs. 5 to 7, in the spraying part 33, two nozzle hole lines 34 and 35 are formed in upper and lower sides. In the upper nozzle hole line 34, a plurality of upper nozzle holes 34a are arranged on a circle centering on the nozzle axis 36 at regular intervals. Furthermore, each of the upper nozzle holes 34a is formed so that an upper nozzle hole axis 43 with a dip D1 substantially passes through the sphere center 40 of the semiglobular side surface 33a and is opened substantially perpendicularly to the semiglobular side surface 33a.

Similarly, in a lower nozzle hole line 35, a plurality of lower nozzle holes 35a are arranged on a circle centering on the nozzle axis 36 at regular intervals. Furthermore, each of the lower nozzle holes 35a is formed so that an lower nozzle hole axis 44 with a dip D2 substantially passes through the sphere center 40 of the semiglobular side surface 33a and is opened substantially perpendicularly to the semiglobular side surface 33a.

Accordingly, fuel can be injected substantially perpendicularly to the semiglobular side surface 33a of the spraying part 33 via each of the upper nozzle holes 34a and the lower nozzle holes 35a, whereby generation of an irregular vortex and the like is prevented so as to reduce unevenness of fuel distribution in the combustion chamber 15.

When the nozzle hole length and the nozzle hole diameter of each of the upper nozzle holes 34a are respectively referred to as L1 and d1 and the nozzle hole length and the nozzle hole diameter of each of the lower nozzle holes 35a are respectively referred to as L2 and d2, in this embodiment, the nozzle hole lengths are the same (L1=L2), but the nozzle hole diameter d1 of each of the upper nozzle holes 34a is larger than the nozzle hole diameter d2 of each of the lower nozzle holes 35a (d1>d2).

On the other hand, the combustion chamber 15 is formed among the lower surface 3d of the cylinder head 3, the inner surface of the cylinder 31 and the cavity 38 formed by processing a top 6a of the piston 6 concavely. At the substantially center of the cavity 38 in the plan view, a substantially flat circular bottom surface 38b is formed. A slant surface 38a which is truncated cone-like shaped and opened upward surrounds the bottom surface 38b, and the bottom surface 38b is closer to the spraying part 33 than the slant surface 38a.

In the construction as mentioned above, fuel injected from the upper nozzle holes 34a is dispersed toward the slant surface 38a on the upper nozzle hole axis 43 with a spray angle θ1 to a spray length S1 so as to form an upper fuel spray pattern 45. Furthermore, fuel injected from the lower nozzle holes 35a is dispersed toward the bottom surface 38b on the lower nozzle hole axis 44 with a spray angle θ2 to a spray length S2 so as to form a lower fuel spray pattern 46.

In the fuel spray patterns 45 and 46, as smaller as a spray nozzle diameter d is, as smaller as the flow rate and speed of the injection from the nozzle holes 34a and 35a become, whereby a spray range becomes short. Namely, the rectilinear propagation characteristic discussed above is small. Therefore, the rectilinear propagation characteristic of the lower fuel spray pattern 46 from the lower nozzle holes 35a is smaller than the rectilinear propagation characteristic of the upper fuel spray pattern 45. By setting the spray length S2 of the lower fuel spray pattern 46 shorter than the spray length S 1 of the upper fuel spray pattern 45, the fuel constituting the lower fuel spray pattern 46 can be made not touch the bottom surface 38b as much as possible.

In this case, the rectilinear propagation characteristic of the upper nozzle holes 34a is large. However, since the spraying part 33 is far from the slant surface 38a, the fuel constituting the upper fuel spray pattern 45 can also be made not touch the slant surface 38a as much as possible.

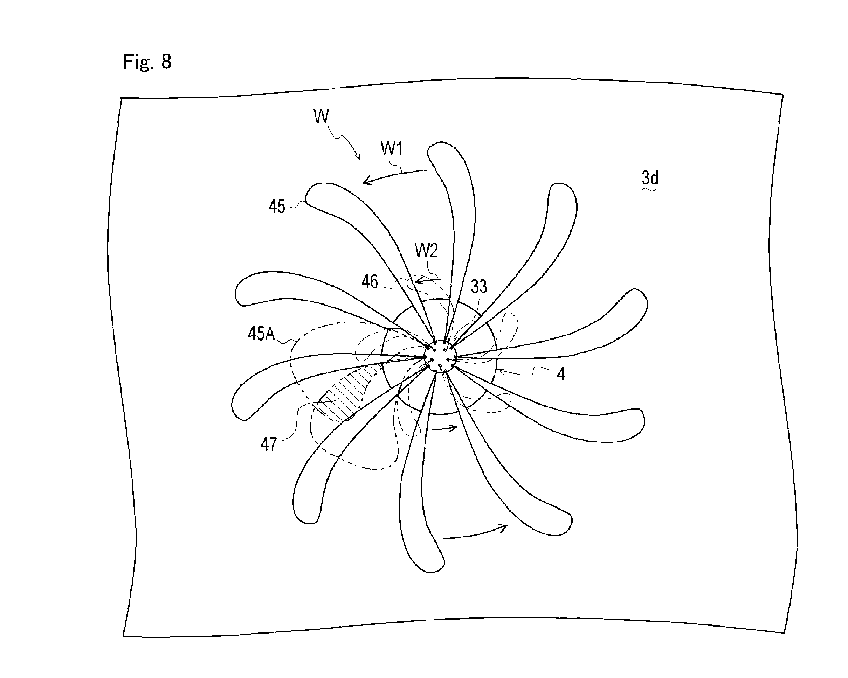

An explanation will be given on the case in which a large swirl flow W is generated by variation of intake condition or the like in the different diameter multi-nozzle structure including the upper nozzle holes 34a and the lower nozzle holes 35a different in the diameters as shown in Figs. 5 and 8. In the swirl flow W, a swirl flow W1 at the outer side in the swirl has higher speed than a swirl flow W2 at the inner side in the swirl, and has large power which pushes the fuel spray patterns 45 and 46 to the swirl direction and make them curve (hereinafter, referred to as "curve power").

In this case, since the dip D1 of the upper nozzle holes 34a is smaller than the dip D2 of the lower nozzle holes 35a, the upper fuel spray pattern 45 passes penetratingly through the swirl flow W1 at the outer side in the swirl with high speed. However, since the rectilinear propagation characteristic of the upper fuel spray pattern 45 is high as mentioned above, the influence of the curve power from the swirl flow W1 is small, and the overlapping of the upper fuel spray patterns 45 by the push of the swirl flow W1 is small.

To the contrary, the lower fuel spray pattern 46 passes penetratingly through the swirl flow W2 at the inner side in the swirl with low speed, and receives little influence from the curve power from the swirl flow W2. Therefore, though the rectilinear propagation characteristic of the lower fuel spray pattern 46 is small, the lower fuel spray patterns 46 do not overlap each other by the push of the swirl flow W2. When such a large swirl flow W is generated, the fuel spray patterns 45 and 46 are curved so as not tend to touch the slant surface 38a and the bottom surface 38b. By forming the shapes of the air intake passages 3b and the cavity 38 so as to reduce the swirl flow W, the overlapping of the fuel spray patterns 45 and 46 can be reduced further.

When the nozzle hole diameter d1 of each of the upper nozzle holes 34a is set the same as the nozzle hole diameter d2 of each of the lower nozzle holes 35a (d1=d2) so as to reduce rectilinear propagation characteristic of upper fuel spray pattern 45A, since the influence of the curve power on the upper fuel spray pattern 45A from the swirl flow W1 is large, the upper fuel spray patterns 45A are pushed and overlap each other, whereby a wide spray overlapping area 47 is generated and the fuel density is increased partially in the wide spray overlapping area 47.

In the diesel engine 1 configured so that the fuel spray patterns 45 and 46 are formed in the combustion chamber 15, in which the swirl flow W of intake air is generated, by directly injecting the fuel from the fuel injection nozzle 4 having the multiple nozzle hole structure, the overlapping avoidance structure is provided for reducing the overlapping of the fuel spray patterns 45 and 46 from adjacent nozzle holes 34a and 35a, and the valve timing mechanism 17 is provided as the overlapping avoidance structure, whereby the valve timing mechanism 17 sets the timing 29a, 50a and 51a, each of which is the start point of the valve closing operation of the air intake valves 3c for sucking air into the combustion chamber 15, to the point before the bottom dead center B of air intake. Accordingly, in the valve timing mechanism 17, after starting the valve closing action, since the air intake passages 3b are closed gradually by the air intake valves 3c, the air intake process is continued while the intake air flow is restricted until the piston 6 reaches the bottom dead center B. Therefore, the intake air is adiabatically expanded so as to reduce the intake air temperature in the cylinder 31, whereby the combustion maximum temperature is reduced so as to reduce generation amount of NOx. In this case, differently from the case of performing the timing retard, the ratio of fuel supplied after the initial combustion is not increased. Furthermore, in the valve timing mechanism 17, by shortening the valve opening time, the air intake amount at the high lift part at which the swirl flow tends to cause is restricted, and by expanding the intake air, the swirl flow W following the air intake is made small, whereby the overlapping caused by curving the fuel spray patterns 45 and 46 by the swirl flow W can be reduced even in the multiple nozzle hole structure. Accordingly, by making the wide spray overlapping area 47 small, the partial increase of the fuel density can be reduced, whereby the incomplete combustion can be suppressed so as to improve the fuel economy stably and reduce the generation amount of black smoke.

Furthermore, in the valve closing action, the buffering section 52 in which the seating speed of the air intake valves 3c is reduced so as to buffer the impact of the seating is provided, and the timing 51c which is the start point of the buffer section 52 is set to the point before the bottom dead center B of air intake. Accordingly, the seating speed of the air intake valves 3c can be reduced before large pressure variation occurs in the combustion chamber 15 at the bottom dead center B, whereby the air intake valves 3c can be prevented from colliding hard with the seat surfaces under such pressure variation so as to prevent the damage of the air intake valves 3c or the seat surfaces.

Moreover, as the overlapping avoidance structure, the different diameter multi-nozzle structure is provided in addition to the valve timing mechanism 17. The different diameter multi-nozzle structure includes a plurality of upper and lower nozzle hole lines, in this embodiment the upper and lower two nozzle hole lines 34 and 35. In this embodiment, between the nozzle hole lines 34 and 35, the nozzle hole diameter d1 of the upper nozzle hole line 34 at the upper side with small dip D of fuel injection direction is set large so as to increase the rectilinear propagation characteristic. Accordingly, in the diesel engine 1, when the large swirl flow W is generated by variation of air intake condition or the like, the rectilinear propagation characteristic of the upper fuel spray patterns 45 passing through the swirl flow W1 at the outer side in the swirl with high speed can be increased, whereby the rectilinear propagation characteristics of the fuel spray patterns 45 and 46 can be rationalized corresponding to the curve power from the swirl flow W. Therefore, the touching of the tips of the fuel spray patterns 45 and 46 to the slant surface 38a and the bottom surface 38b which are the wall parts of the combustion chamber 15 and the stacking of much carbon as the result thereof can be suppressed minimally, and the wide spray overlapping area 47 can be made small so as to reduce the partial increase of the fuel density. Accordingly, the air utilization rate in the combustion chamber 15 can be improved so as to improve the fuel economy stably and reduce the generation amount of black smoke even if the large swirl flow W is generated.

### Industrial Applicability

The present invention can be employed in all diesel engine in which a plurality of fuel spray patterns are formed in a combustion chamber, in which a swirl flow of intake air is generated, by directly injecting fuel from a fuel injection nozzle having a multiple nozzle hole structure.

## Claims

1. A diesel engine in which fuel is injected directly from a fuel injection nozzle having multiple nozzle hole structure to a combustion chamber, in which a swirl flow is generated, so as to form a plurality of fuel spray patterns, comprising:
an overlapping avoidance structure reducing overlapping of the fuel spray patterns from adjacent nozzle holes,
wherein a valve timing mechanism, which sets a start point of closing operation of an air intake valve sucking air into the combustion chamber to a point before the bottom dead center of air intake, is provided as the overlapping avoidance structure, and
wherein a buffering section in which seating speed of the air intake valve is reduced so as to buffer impact of seating is provided in the valve closing action, and a start point of the buffer section is set to a point before the bottom dead center of air intake.

2. The diesel engine according to claim 1,
wherein a different diameter multi-nozzle structure is provided as the overlapping avoidance structure in addition to the valve timing mechanism, and
wherein the different diameter multi-nozzle structure includes a plurality of upper and lower nozzle hole lines, and among the nozzle hole lines, nozzle hole diameter of the nozzle hole line at the upper side with small dip of fuel injection direction is set large so as to increase rectilinear propagation characteristic.
